# EUROPÄISCHE PATENTANMELDUNG

(11) **EP 4 786 278 A1**
(43) Veröffentlichungstag der Anmeldung: **05.08.2026**
(21) Anmeldenummer: 26155002.4
(22) Anmeldetag: 29.01.2026
(51) Int. Cl.: B60R 1/25, B60R 1/26, B60R 1/28

(54) **DIGITALES SICHTSYSTEM FÜR EIN FAHRZEUG UND VERFAHREN ZUM ANPASSEN EINES VORGEGEBENEN SICHTBEREICHS IN EINEM VON DEM SICHTSYSTEM ERZEUGTEN ANZEIGEBILD**

(30) Priorität: 31.01.2025 DE 102025103671
(71) Anmelder: MEKRA Lang GmbH & Co. KG, 91465 Ergersheim (DE)
(72) Erfinder: Hutzler, Oliver, 97215 Uffenheim (DE); Scheffold, Michael, 91438 Bad Windsheim (DE); Enz, Andreas, 91593 Burgbernheim (DE)
(74) Vertreter: Alpspitz IP

(57) **Zusammenfassung**

Digitales Sichtsystem und Verfahren zum Anpassen eines auf einer Wiedergabeeinheit eines digitalen Sichtsystems eines Fahrzeugs angezeigten Sichtbereichs, wobei das Verfahren die Schritte aufweist: Erfassen S1 von Bilddaten einer Umgebung des Fahrzeugs durch eine Bildaufnahmeeinheit des digitalen Sichtsystems, Verarbeiten S2 der erfassten Bilddaten durch eine Bilddatenverarbeitungseinheit, Anzeigen S3 der verarbeiteten Bilddaten auf der Wiedergabeeinheit als Anzeigebild mit dem Sichtbereich, Erhalten S4 von Information, die kennzeichnend ist für einen Straßenverlauf einer Straße, auf der das Fahrzeug fährt und/oder auf die es zufährt, und Verarbeiten der erfassten Bilddaten mindestens in Abhängigkeit von der erhaltenen Information über den Straßenverlauf derart, dass das auf der Wiedergabeeinheit angezeigte Anzeigebild eine Sichtbereichsanpassung S5a, S7 erfährt, wobei die Sichtbereichsanpassung S5a, S7 in dem Anzeigebild erfolgt, wenn das Fahrzeug einen auf dem Straßenverlauf liegenden vordefinierten Triggerpunkt erreicht, oder eine vordefinierte Zeit danach verzögert.

## Beschreibung

### Technisches Gebiet

Die Erfindung betrifft ein digitales Sichtsystem für ein Fahrzeug (beispielsweise Nutzfahrzeug, LKW, Baumaschine, etc.) zur Anzeige von vorgegebenen Sichtbereichen um das Fahrzeug herum, sowie ein von dem digitalen Sichtsystem ausführbares Verfahren zum Anpassen des Sichtbereichs an einen zu erwarteten Straßenverlauf einer Straße, auf der das Fahrzeug fährt bzw. auf die es zufährt.

### Stand der Technik

Kraftfahrzeuge sind üblicherweise beidseitig mit Außenspiegeln im Blickfeld eines Fahrers ausgerüstet, die zum Beispiel ein seitliches und/oder rückwärtiges Umfeld des Kraftfahrzeugs erfassen. Insbesondere bei Nutzfahrzeugen sind dazu jeweils Spiegelsysteme vorgeschrieben, die aus mehreren Spiegeln bestehen, welche mit unterschiedlichen Größen und Spiegelkrümmungen Teilbereiche des Umfelds des Nutzfahrzeugs erfassen. Außenspiegel haben den Nachteil, dass sie besonders stark Umwelteinflüssen unterliegen und damit verschmutzen, vereisen, usw., so dass das auf dem Spiegel einsehbare Bild nicht oder nur undeutlich erkennbar ist, und dann die Spiegelfunktion nur unzureichend erfüllt wird.

In letzter Zeit werden daher Außenspiegel zunehmend durch digitale Sichtsysteme, insbesondere Spiegelersatzsysteme, die mindestens eine Bilderfassungseinheit, beispielsweise eine Hauptkamera (Kamera, die hauptsächlich das Hauptspiegelsichtfeld eines Nutzfahrzeugs erfasst) und eine Weitwinkelkamera (Kamera, die hauptsächlich das Weitwinkelspiegelsichtfeld eines Nutzfahrzeugs erfasst) aufweisen, ersetzt. Zum Beispiel werden mit solchen digitalen Sichtsystemen, die als Spiegelersatzsystem am Nutzfahrzeug verwendet werden, die Sichtfelder der Gruppen II und IV gemäß UN/ECE-R46 erfasst und dem Fahrer auf mindestens einer Wiedergabeeinheit (Monitor) für diesen einsehbar dargestellt. Die Wiedergabeeinheit kann dabei einen einzelnen Anzeigebereich oder eine Mehrzahl von Anzeigebereichen aufweisen, wobei in letzterem Fall dem Fahrer die Umgebung des Fahrzeugs in unterschiedlicher Art und Weise in den einzelnen Anzeigebereichen angezeigt werden kann.

In der Regel wird auf einer Wiedergabeeinheit oder auf jedem von einer Mehrzahl von Anzeigebereichen auf der Wiedergabeeinheit eines solcher digitalen Sichtsysteme während eines jeweiligen Fahrtzustands, wie z.B. Vorwärtsfahrt, Rückwärtsfahrt etc., ein bestimmter Bereich der Umgebung des Fahrzeugs abgebildet. So wird beispielsweise während der Vorwärtsfahrt des Fahrzeugs ein Bereich seitlich und rückwärtig vom Fahrzeug dargestellt, der bei Spiegeln dem Hauptspiegel und Weitwinkelspiegel (Sichtfelder II und IV gemäß UN/ECE-R46) entspricht. Weitere digitale Sichtsysteme (Kamera-Monitorsysteme) können vorgesehen werden, die beispielsweise bei einer Rückwärtsfahrt verwendet werden, um den hinteren Bereich des Fahrzeugs anzuzeigen.

Für bestimmte Fahrsituationen kann es notwendig oder wünschenswert sein, einen mittels eines digitalen Sichtsystems angezeigten Bereich der Umgebung des Fahrzeugs zu verändern, um beispielsweise die Verkehrssituation um das Fahrzeug herum besser erfassen und dem Fahrer anzeigen zu können. Eine Anpassung des angezeigten Sichtbereichs kann auch wünschenswert sein für bestimmte Straßenverläufe einer Straße, auf die das Fahrzeug zufährt.

Beispiele für derartige Fahrsituationen bzw. Straßenverläufe sind 45 Grad Einmündungen an einer Kreuzung oder Autobahnauffahrten. Wenn das Fahrzeug in diesen Situationen fährt, kann es sein, dass beispielsweise ein standardmäßig angezeigte Bereich, der beispielsweise ein vorgegebener Sichtbereich seitlich und rückwärtig vom Fahrzeug ist, nicht den gesamten für den Fahrer wichtigen Bereich erfasst bzw. nicht die für den Fahrer wichtige Information darstellt oder sogar gar keine relevanten Bereiche zeigt, um beispielsweise bei Auffahrt auf eine Autobahn das Verkehrsgeschehen auf der Autobahn bzw. im Bereich der Auffahrt beobachten zu können und somit eine vorausschauende und sichere Fahrt gewährleisten zu können. Eine Autobahnauffahrt bzw. -ausfahrt stellt dabei beispielsweise einen typischen vorgegebenen Straßenverlauf dar. Das Auffahren auf eine Autobahn kann dabei beispielsweise als eine vorgegebene standardisierte Fahrsituation angesehen werden. Ein anderes Beispiel ist das Überqueren von Kreuzungen, bei denen es für den Fahrer ggf. wünschenswert ist, die zu querende Straße besser einsehen zu können.

### Darstellung der Erfindung

Aufgabe der Erfindung ist es, ein digitales Sichtsystem und ein Verfahren zu schaffen, mit denen es möglich ist, einem Fahrer eines Kraftfahrzeugs in bestimmten Fahrsituationen und zu einem geeigneten Zeitpunkt besserer Information über die Umgebung des Fahrzeugs zu liefern, die hilfreich ist für eine vorrausschauende und sichere Fahrt.

Obige Aufgabe wird durch ein Verfahren gemäß Anspruch 1 und ein digitales Sichtsystem gemäß Anspruch 8 gelöst. Vorteilhafte Weiterbildungen der Erfindung sind in den abhängigen Ansprüchen angegeben.

Das erfindungsgemäße Verfahren zeichnet sich dadurch aus, dass ein von einer Wiedergabeeinheit eines erfindungsgemäßen digitalen Sichtsystems eines Fahrzeugs angezeigter Sichtbereich in Abhängigkeit von einem Straßenverlauf einer Straße, auf der das Fahrzeug fährt bzw. auf die es zufährt, angepasst wird. Der Straßenverlauf stellt insbesondere einen erwarteten zukünftigen Verlauf einer Straße dar, auf der das Fahrzeug weiter fahren wird. Die Sichtbereichsanpassung ist dabei derart, dass dem Fahrer des Fahrzeugs für ihn relevante Umgebungsinformation angezeigt wird, die eine vorrauschauende und sichere Fahrt ermöglicht. Eine solche Sichtbereichsanpassung erfolgt insbesondere erfindungsgemäß dann, wenn ein vordefinierter auf dem Straßenverlauf liegender Triggerpunkt erreicht wird, oder eine vordefinierte Zeit danach. Ein Triggerpunkt liegt dabei nicht "physikalisch" auf der Straße, sondern ist einem auf dem Straßenverlauf vorhandenem Merkmal zugeordnet. Ein derartiges Merkmal kann beispielsweise ein Verkehrsschild, ein bestimmter Krümmungsradius einer Fahrbahnmarkierung, eine Leitplanke, eine Ampel, ein Abstand zu einer Kreuzung, etc. sein.

Ein derartiger Triggerpunkt ist ein Punkt, der kennzeichnend ist für eine Änderung des Straßenverlaufs, wobei die vordefinierte Zeit auf empfangenen fahrzeuginternen Signalen, einer aktuellen Verkehrssituation und/oder einer aktuellen Fahrsituation basiert. Ein Triggerpunkt für eine Sichtbereichsanpassung kann beispielsweise das Erreichen eines bestimmten Punktes (Koordinate) auf einer Karte sein, z.B. ein bestimmter Punkt in der Kurve einer Autobahnauffahrt oder das Erreichen eines bestimmten Punkts an oder kurz vor einer Kreuzung mit gewissem Toleranzbereich. Hierzu können beispielswiese GPS-Daten verwendet werden, die die aktuelle Position des Fahrzeugs angeben. Diese Position kann dann mit den Kartendaten verglichen werden, die den Triggerpunkt angeben, um festzustellen, ob der Triggerpunkt erreicht ist. Zusätzlich oder alternativ zu GPS Daten können auch am Fahrzeug angebrachte Sensoren (Ultraschall, Radar, Lidar) verwendet werden, die den Triggerpunkt detektieren, beispielsweise ein Verkehrsschild, einen bestimmten Krümmungsradius einer Fahrbahnmarkierung, etc.

Erfindungsgemäß wird bevorzugt die Bildaufnahmeeinheit verwendet, um mittels der erfassten Bilddaten zu bestimmten, ob der Triggerpunkt erreicht ist. Die Bildaufnahmeeinheit kann eine der Bildaufnahmeeinheiten des digitalen Sichtsystems sein oder eine separat davon vorgesehene Bildaufnahmeeinheit. Dabei werden Merkmale in den erfassten Bilddaten detektiert, die kennzeichnend sind für einen Straßenverlauf. Ein Straßenverlauf ist insbesondere gekennzeichnet durch Brücken, Kurven, Auffahrten, Einmündungen, uneinsichtige Kreuzungen, Tunnel, Autobahnauffahrten, Auffahrten auf Bundesstraßen, Fahrradwege, Parkreihen entlang einer Straße, etc., wobei diese Aufzählung nicht abschließend ist. Solche Information, die kennzeichnend ist für den Straßenverlauf, kann zum Beispiel durch Auswerten von Navigationsinformation bezüglich der Fahrt des Fahrzeugs, durch Auswerten von Fahrzeugparametern, wie z.B. ob ein Blinker gesetzt ist oder nicht, durch Empfangen von Verkehrsleitsysteminformation, durch Analyse von aufgenommen Bilddaten des Sichtsystems oder Ähnliches ermittelt werden. Merkmale für den Straßenverlauf enthalten mindestens Information über eine Fahrbahnmarkierung, eine Straßenrandmarkierung und/oder eine Fahrspurmarkierung enthalten. Das Erkennen einer bestimmten Markierung bzw. eines bestimmten Merkmals in den Bilddaten kann das Erreichen des Triggerpunkts zur Anpassung des Sichtbereichs angeben.

Erfindungsgemäß kann das Ermitteln des Straßenverlaufs und damit das Erkennen, ob ein Triggerpunkt erreicht ist, auch auf anderen am Fahrzeug angebrachte Sensoren basieren, z.B. mittels Ultraschalls, Radar, Lidar, etc. Fahrbahnmarkierungen mit einem vorbestimmten Krümmungsradius, der für eine Autobahnauffahrt oder eine Kreuzung beispielsweise kennzeichnend ist, können das Vorliegen eines Triggerpunkts angeben.

Der oben genannte Triggerpunkt kann auch mit der Fahrgeschwindigkeit des Fahrzeugs, das das digitale Sichtsystem aufweist, oder anderer Verkehrsteilnehmer kombiniert werden, um zu berechnen, ab wann für den Fahrer die Anpassung des Sichtbereichs sinnvoll ist. So kann bei Auffahrten in einer Stausituation die Anpassung des Sichtbereichs bei Unterschreiten eines Geschwindigkeitswerts später erfolgen, da der Fahrer deutlich mehr Zeit hat sich einen Überblick über die ihm angezeigte Bildinformation zu verschaffen, im Vergleich zu einer Situation, bei der das Fahrzeug mit hoher Geschwindigkeit auf den Beschleunigungsstreifen auffährt. Wie oben erwähnt, kann eine Stausituation beispielsweise durch Bilderkennung oder Auswertung von Sensorsignalen erfolgen.

Zusätzlich oder alternativ liest das erfindungsgemäße Verfahren vorabgespeicherte Straßenkartendaten aus einem Speicher aus, um die Information, die für den Straßenverlauf kennzeichnend ist, zu ermitteln, wobei die Straßenkartendaten mindestens eine Höheninformation der Straßenführung, eine Art der Straßenführung (Einmündung, Autobahnauffahrt, Kreuzung, Brücken, Tunnel, etc. ), eine Winkelrelation zwischen zwei zusammenkommenden Straßen, eine Straßenkrümmung und/oder ein anderes oben genanntes Merkmal für einen Straßenverlauf enthalten. Die Straßenkarte kann dabei in einem in dem Fahrzeug vorgesehenen Speicher im Voraus gespeichert sein und beispielsweise zur Navigation verwendet werden, oder kann drahtlos oder drahtgebunden von einem anderen System zur Verfügung gestellt werden.

Gemäß einer vorteilhaften Weiterbildung kann das erfindungsgemäße Verfahren Merkmale in den erfassten Bilddaten bestimmen, die kennzeichnend sind für eine aktuelle Verkehrssituation, wobei derartige Merkmale mindestens Information über andere Verkehrsteilnehmer, deren Abstand zueinander bzw. zum eigenen Fahrzeug und/oder deren Geschwindigkeit enthalten. Mit Hilfe solcher Merkmale kann bestimmt werden, ob bzw. wann eine Sichtbereichsanpassung vorgenommen wird oder nicht, und/oder die Information kann dazu verwendet werden, um den Fahrer zu warnen, wenn z.B. eine gefährliche Verkehrssituation oder Ähnliches bevorstehen könnte. Die Information kann auch verwendet werden, um beispielsweise zähfließenden Verkehr auf einer Autobahn zu erkennen, auf die das Fahrzeug auffährt. In diesem Fall kann beispielsweise die Sichtbereichsanpassung langsamer erfolgen, da das Fahrzeug langsamer fährt und der Fahrer somit mehr Zeit hat die augenblickliche Situation einzuschätzen, wie oben erwähnt.

Das erfindungsgemäße Verfahren empfängt vorteilhafterweise neben fahrzeugexternen Signalen auch fahrzeuginterne Signale, vorteilhafterweise von einem vorhandenen Fahrzeugnetzwerk (z.B. CAN-Bus, LIN, Ethernet, etc.), und beispielsweise Signale, die die Geschwindigkeit, Beschleunigung, Lenkradeinschlagwinkel, Knickwinkel zwischen Zugmaschine und Anhänger eines Nutzfahrzeugs etc. betreffen. Solche Information von fahrzeuginternen Signalen kann dazu verwendet werden, die Information über den Straßenverlauf zu ermitteln, um zu bestimmen, ob eine gefährliche Verkehrssituation vorliegen könnte, und/oder zu bestimmen, ob und wie eine Sichtbereichsanpassung vorgenommen werden soll.

Gemäß einer vorteilhaften Weiterbildung verwendet das erfindungsgemäße Verfahren nicht nur Information über den Straßenverlauf zur Sichtbereichsanpassung, sondern zusätzlich die oben genannte Information über die Verkehrssituation bzw. fahrzeuginterne und fahrzeugexterne Signale. Das erfindungsgemäße Verfahren verarbeitet also die erfassten Bilddaten in Abhängigkeit von der Information über den Straßenverlauf und zusätzlich in Abhängigkeit von der aktuellen Verkehrssituation und/oder den empfangenen fahrzeuginternen Signalen derart, dass das auf der Wiedergabeeinheit angezeigte Anzeigebild die Sichtbereichsanpassung zu einem gegebenen Zeitpunkt erfährt.

Das erfindungsgemäße Verfahren kann zur Sichtbereichsanpassung insbesondere einen oder mehrere der folgenden Schritte durchführen: Skalieren der Bilddaten derart, dass das Anzeigebild mehr oder weniger von der Umgebung des Fahrzeugs zeigt, Zuschneiden des Anzeigebilds derart, dass mehr oder weniger von der Umgebung des Fahrzeugs gezeigt wird, Verändern eines Auslesebereichs auf dem Bildsensor, der für das Anzeigebild verwendet wird derart, dass die auf dem Anzeigebild gezeigte Umgebung des Fahrzeugs verschoben wird, und/oder Verändern einer Bildaufteilung des Anzeigebilds derart, dass verschiedene Bereiche der Umgebung in unterschiedlichen Anzeige- bzw. Bildbereichen des Anzeigebilds angezeigt werden. Dies kann beispielsweise jeweils entweder dadurch geschehen, dass von dem Bildsensor verschiedene bzw. angepasste Bereiche der Bilddaten entnommen (ausgelesen) werden, oder dadurch, dass zwar stets dieselben Rohdaten aus dem Bildsensor entnommen werden, aber anschließend durch Bearbeitung der Rohdaten die darzustellenden Bereiche gewählt werden.

Bei der Sichtbereichsanpassung durch eine Veränderung des Auslesebereichs auf dem Bildsensor der Bildaufnahmeeinheit wird der Auslesebereich auf dem Bildsensor, also die lokale Position des Auslesebereichs auf dem Bildsensor, verändert. Die Anzahl der ausgelesenen Pixel kann dabei variieren oder gleichbleiben. Ferner kann auch die Größe des Auslesebereichs geändert werden, um den Sichtbereich entsprechend anzupassen. Wenn das Anzeigebild auf der Wiedergabeeinheit mehrere "einzelne" Bilder zeigt, das Anzeigebild also unterschiedliche Anzeige- bzw. Bildbereiche hat, kann die Skalierung in verschiedenen Anzeige- bzw. Bildbereichen unterschiedlich sein, also das Abbildungsverhältnis von Bildsensorpixeln und Monitorpixeln kann unterschiedlich sein. Skalierung ist dabei ein Maß dafür wie viele Bildsensorpixel auf einem Monitorpixel dargestellt werden. Mit der Skalierung des Bildes geht dann auch eine Veränderung des dargestellten Bildbereichs einher. Ebenfalls ist es möglich, dass die Sichtbereichsanpassung vorgenommen wird, indem das gesamte Bild ausgelesen wird und der zur Wiedergabe verwendete Bereich im Nachgang durch die Bildverarbeitungseinheit angepasst wird. Unabhängig davon, wie die Sichtbereichsanpassung vorgenommen wird, wird bei einer Erweiterung des Sichtbereichs ein größerer Teil des Sensors ausgelesen bzw. zumindest zur Wiedergabe verwendet, was beispielsweise bei einer Autobahnauffahrt sinnvoll sein kann.

Die Sichtbereichsanpassung kann zusätzlich oder alternativ zu der oben genannten digitalen Anpassung des Sichtbereichs dadurch erfolgen, dass das erfindungsgemäße Verfahren gemäß einer Weiterbildung einen Verstellmechanismus eines an dem Fahrzeug angebrachten Kameraarms steuert, um die relative Position zwischen der Bildaufnahmeeinheit und dem Fahrzeug einzustellen, damit das auf der Wiedergabeeinheit angezeigte Anzeigebild die Sichtbereichsanpassung erfahren kann.

Das oben beschriebene Verfahren gemäß der Erfindung kann von einem digitalen Sichtsystem für ein Fahrzeug gemäß einem der Ansprüche 11 bis 22 ausgeführt werden.

Ein derartiges erfindungsgemäßes Sichtsystem enthält eine am Fahrzeug anbringbare Bildaufnahmeeinheit, die angepasst ist zum Erfassen von Bilddaten der Umgebung des Fahrzeugs, eine Bilddatenverarbeitungseinheit, die angepasst ist, die von der Bildaufnahmeeinheit erfassten Bilddaten zu verarbeiten, eine von einem Fahrer des Fahrzeugs einsehbare Wiedergabeeinheit, auf der die von der Bildaufnahmeeinheit aufgenommenen und die von der Bilddatenverarbeitungseinheit verarbeiteten Bilddaten als Anzeigebild mit dem vorgegebenen Sichtbereich dem Benutzer angezeigt werden, eine Einheit zum Erhalten von Information, die kennzeichnend ist für einen Straßenverlauf einer Straße, auf der das Fahrzeug fährt und/oder auf die es zufährt, wobei die Bilddatenverarbeitungseinheit angepasst ist, die von der Bildaufnahmeeinheit aufgenommen Bilddaten mindestens in Abhängigkeit von der ermittelten Information über den Straßenverlauf derart zu verarbeiten, dass das dem Benutzer auf der Wiedergabeeinheit angezeigte Anzeigebild eine Sichtbereichsanpassung erfährt. Dabei kann, wie bezüglich des erfindungsgemäßen Verfahrens oben beschrieben, die Sichtbereichsanpassung vorteilhafterweise direkt bei oder nach einer vordefinierten Zeit nach einem Erreichen eines Triggerpunkts, der für eine Änderung des Straßenverlaufs kennzeichnend ist, erfolgen.

Ein derartiger Triggerpunkt ist ein Punkt, der kennzeichnend ist für eine Änderung des Straßenverlaufs, wobei die vordefinierte Zeit auf empfangenen fahrzeuginternen Signalen, einer aktuellen Verkehrssituation und/oder einer aktuellen Fahrsituation basiert. Ein Triggerpunkt für eine Sichtbereichsanpassung kann beispielsweise das Erreichen eines bestimmten Punktes (Koordinate) auf einer Karte sein, z.B. ein bestimmter Punkt in der Kurve einer Autobahnauffahrt oder das Erreichen eines bestimmten Punkts an oder kurz vor einer Kreuzung mit gewissem Toleranzbereich. Hierzu können beispielswiese GPS-Daten verwendet werden, die die aktuelle Position des Fahrzeugs angeben. Diese Position kann dann mit den Kartendaten verglichen werden, die den Triggerpunkt angeben, um festzustellen, ob der Triggerpunkt erreicht ist. Zusätzlich oder alternativ zu GPS Daten können auch am Fahrzeug angebrachte Sensoren (Ultraschall, Radar, Lidar) verwendet werden, die den Triggerpunkt detektieren, beispielsweise ein Verkehrsschild, einen bestimmten Krümmungsradius einer Fahrbahnmarkierung, etc.

Die Bildverarbeitungseinheit des digitalen Sichtsystems ist angepasst, um mittels der erfassten Bilddaten zu bestimmten, ob der Triggerpunkt erreicht ist. Dabei werden Merkmale in den erfassten Bilddaten detektiert, die kennzeichnend sind für einen Straßenverlauf. Ein Straßenverlauf ist insbesondere gekennzeichnet durch Brücken, Kurven, Auffahrten, Einmündungen, uneinsichtige Kreuzungen, Tunnel, Autobahnauffahrten, Auffahrten auf Bundesstraßen, Fahrradwege, Parkreihen entlang einer Straße, etc., wobei diese Aufzählung nicht abschließend ist. Solche Information, die kennzeichnend ist für den Straßenverlauf, kann zum Beispiel durch Auswerten von Navigationsinformation bezüglich der Fahrt des Fahrzeugs, durch Auswerten von Fahrzeugparametern, wie z.B. ob ein Blinker gesetzt ist oder nicht, durch Empfangen von Verkehrsleitsysteminformation, durch Analyse von aufgenommen Bilddaten des Sichtsystems oder Ähnliches ermittelt werden. Merkmale für den Straßenverlauf enthalten mindestens Information über eine Fahrbahnmarkierung, eine Straßenrandmarkierung und/oder eine Fahrspurmarkierung enthalten. Das Erkennen einer bestimmten Markierung bzw. eines bestimmten Merkmals in den Bilddaten kann das Erreichen des Triggerpunkts zur Anpassung des Sichtbereichs angeben.

Gemäß einer bevorzugten Ausführungsform enthält das digitale Sichtsystem weitere Sensoren zum Ermitteln des Straßenverlaufs und damit zum Erkennen, ob ein Triggerpunkt erreicht ist. Vorzugsweise sind diese Sensoren (Ultraschall, Radar, Lidar, etc.) an dem Fahrzeug angebracht und angepasst zum Detektieren von beispielsweise Fahrbahnmarkierungen mit einem vorbestimmten Krümmungsradius, der für eine Autobahnauffahrt oder eine Kreuzung beispielsweise kennzeichnend ist, für das Vorliegen eines Triggerpunkts.

Der oben genannte Triggerpunkt kann auch mit der Fahrgeschwindigkeit des Fahrzeugs, in dem das digitale Sichtsystem verbaut ist, oder anderer Verkehrsteilnehmer kombiniert werden, um zu berechnen, ab wann für den Fahrer die Anpassung des Sichtbereichs sinnvoll ist. So kann bei Auffahrten in einer Stausituation die Anpassung des Sichtbereichs bei Unterschreiten eines Geschwindigkeitswerts später erfolgen, da der Fahrer deutlich mehr Zeit hat sich einen Überblick über die ihm angezeigte Bildinformation zu verschaffen, im Vergleich zu einer Situation, bei der das Fahrzeug mit hoher Geschwindigkeit auf den Beschleunigungsstreifen auffährt. Wie oben erwähnt, kann eine Stausituation beispielsweise durch Bilderkennung oder Auswertung von Sensorsignalen erfolgen.

Gemäß einer bevorzugten Ausführungsform des digitalen Sichtsystem enthält dieses einen Speicher, der Straßenkartendaten speichert, wobei die Straßenkartendaten mindestens eine Höheninformation der Straßenführung, eine Art der Straßenführung (Einmündung, Autobahnauffahrt, Kreuzung, Brücken, Tunnel, etc. ), eine Winkelrelation zwischen zwei zusammenkommenden Straßen, eine Straßenkrümmung und/oder ein anderes oben genanntes Merkmal für einen Straßenverlauf enthalten.

Gemäß einer bevorzugten Ausführungsform können vorgegebene Triggerpunkte definiert werden und in dem oben genannten Speicher gespeichert werden. Ein separater Speicher kann dafür vorgesehen werden. Eine Vergleichseinheit kann gemäß einer bevorzugten Ausführungsform vorgesehen sein, die detektierte Merkmale des Straßenverlaufs mit diesen gespeicherten Triggerpunkten vergleicht, um zu bestimmen, ob das Fahrzeug einen Triggerpunkt passiert hat.

Gemäß einer vorteilhaften Weiterbildung ist die Bildverarbeitungseinheit angepasst Merkmale in den erfassten Bilddaten bestimmen, die kennzeichnend sind für eine aktuelle Verkehrssituation, wobei derartige Merkmale mindestens Information über andere Verkehrsteilnehmer, deren Abstand zueinander bzw. zum eigenen Fahrzeug und/oder deren Geschwindigkeit enthalten. Mit Hilfe solcher Merkmale kann bestimmt werden, ob bzw. wann eine Sichtbereichsanpassung vorgenommen wird oder nicht, und/oder die Information kann dazu verwendet werden, um den Fahrer zu warnen, wenn z.B. eine gefährliche Verkehrssituation oder Ähnliches bevorstehen könnte. Die Information kann auch verwendet werden, um beispielsweise zähfließenden Verkehr auf einer Autobahn zu erkennen, auf die das Fahrzeug auffährt. In diesem Fall kann beispielsweise die Sichtbereichsanpassung langsamer erfolgen, da das Fahrzeug langsamer fährt und der Fahrer somit mehr Zeit hat die augenblickliche Situation einzuschätzen, wie oben erwähnt.

Gemäß einem bevorzugten Ausführungsbeispiel ist die Einheit des digitalen Sichtsystems angepasst neben fahrzeugexternen Signalen auch fahrzeuginterne Signale zu empfangen, vorteilhafterweise von einem vorhandenen Fahrzeugnetzwerk (z.B. CAN-Bus, LIN, Ethernet, etc.), beispielsweise Signale, die die Geschwindigkeit, Beschleunigung, Lenkradeinschlagwinkel, Knickwinkel zwischen Zugmaschine und Anhänger eines Nutzfahrzeugs etc. betreffen. Solche Information von fahrzeuginternen Signalen kann dazu verwendet werden, die Information über den Straßenverlauf zu ermitteln, um zu bestimmen, ob eine gefährliche Verkehrssituation vorliegt, und/oder zu bestimmen, ob und wie eine Sichtbereichsanpassung vorgenommen werden soll.

Gemäß einer bevorzugten Weiterbildung der Erfindung ist die Bildverarbeitungseinheit angepasst zur Sichtbereichsanpassung insbesondere durch einen oder mehrere der folgenden Schritte: Skalieren der Bilddaten derart, dass das Anzeigebild mehr oder weniger von der Umgebung des Fahrzeugs zeigt, Zuschneiden des Anzeigebilds derart, dass mehr oder weniger von der Umgebung des Fahrzeugs gezeigt wird, Verändern eines Auslesebereichs auf dem Bildsensor, der für das Anzeigebild verwendet wird derart, dass die auf dem Anzeigebild gezeigte Umgebung des Fahrzeugs verschoben wird, und/oder Verändern einer Bildaufteilung des Anzeigebilds derart, dass verschiedene Bereiche der Umgebung in unterschiedlichen Anzeige- bzw. Bildbereichen des Anzeigebilds angezeigt werden. Dies kann beispielsweise jeweils entweder dadurch geschehen, dass von dem Bildsensor verschiedene bzw. angepasste Bereiche der Bilddaten entnommen (ausgelesen) werden, oder dadurch, dass zwar stets dieselben Rohdaten aus dem Bildsensor entnommen werden, aber anschließend durch Bearbeitung der Rohdaten die darzustellenden Bereiche gewählt werden.

Bei der Sichtbereichsanpassung durch eine Veränderung des Auslesebereichs auf dem Bildsensor der Bildaufnahmeeinheit wird der Auslesebereich auf dem Bildsensor, also die lokale Position des Auslesebereichs auf dem Bildsensor, verändert. Die Anzahl der ausgelesenen Pixel kann dabei variieren oder gleichbleiben. Ferner kann auch die Größe des Auslesebereichs geändert werden, um den Sichtbereich entsprechend anzupassen. Wenn das Anzeigebild auf der Wiedergabeeinheit mehrere "einzelne" Bilder zeigt, das Anzeigebild also unterschiedliche Anzeige- bzw. Bildbereiche hat, kann die Skalierung in verschiedenen Anzeige- bzw. Bildbereichen unterschiedlich sein, also das Abbildungsverhältnis von Bildsensorpixeln und Monitorpixeln kann unterschiedlich sein. Skalierung ist dabei ein Maß dafür wie viele Bildsensorpixel auf einem Monitorpixel dargestellt werden. Mit der Skalierung des Bildes geht dann auch eine Veränderung des dargestellten Bildbereichs einher. Ebenfalls ist es möglich, dass die Sichtbereichsanpassung vorgenommen wird, indem das gesamte Bild ausgelesen wird und der zur Wiedergabe verwendete Bereich im Nachgang durch die Bildverarbeitungseinheit angepasst wird. Unabhängig davon, wie die Sichtbereichsanpassung vorgenommen wird, wird bei einer Erweiterung des Sichtbereichs ein größerer Teil des Sensors ausgelesen bzw. zumindest zur Wiedergabe verwendet, was beispielsweise bei einer Autobahnauffahrt sinnvoll sein kann.

Gemäß einer bevorzugten Ausführungsform enthält das digitale Sichtsystem einen Verstellmechanismus zur Sichtbereichsanpassung, zusätzlich oder alternativ zu der oben genannten digitalen Anpassung des Sichtbereichs. Dieser Verstellmechanismus steuert einen an dem Fahrzeug angebrachten Kameraarm, um die relative Position zwischen der Bildaufnahmeeinheit und dem Fahrzeug einzustellen, damit das auf der Wiedergabeeinheit angezeigte Anzeigebild die Sichtbereichsanpassung erfährt.

Bei dem digitalen Sichtsystem können jeweils eine oder mehrere Bildaufnahmeeinheiten, eine oder mehrere Bilddatenverarbeitungseinheiten, und eine oder mehrere Wiedergabeeinheiten vorgesehen sein. Die eine oder mehreren Bilddatenverarbeitungseinheit können in der einen Bildaufnahmeeinheit oder den mehreren Bildaufnahmeeinheiten, und/oder in der einen Wiedergabeeinheit oder den mehreren Wiedergabeeinheiten integriert sein, und/oder separat davon vorgesehen sein, zum Beispiel im Rahmen eines allgemeinen Bordcomputers (ECU).

Das erfindungsgemäße digitale Sichtsystem enthält gemäß einer Weiterbildung eine Mensch-Maschine-Schnittstelle über die die Sichtbereichsanpassung in dem Anzeigebild in Abhängigkeit von Straßenverlauf, Verkehrssituation und/oder Fahrsituation vordefiniert, bestätigt, abgelehnt oder rückgängig gemacht werden kann, beispielsweise durch einen Fahrer. Dadurch können vorkonfigurierte Sichtbereichsanpassungen, die an spezielle standardmäßige Verkehrssituationen angepasst sind, wie beispielsweise Auffahren auf eine Autobahn oder Überfahren einer Kreuzung, dem Fahrer vorgeschlagen werden. Diese können von dem Fahrer einfach übernommen oder abgelehnt werden, oder der Fahrer kann diese an seine individuellen Bedürfnisse anpassen.

Wie oben erwähnt enthält das digitale Sichtsystem enthält gemäß einem bevorzugten Ausführungsbeispiel einen Kameraarm, an dem die mindestens eine Bildaufnahmeeinheit befestigt ist.

Der Kameraarm ist mit einem Verstellmechanismus gekoppelt zur Veränderung der relativen Position zwischen mindestens einer der Bildaufnahmeeinheiten und dem Fahrzeug derart, dass das dem Benutzer auf der Wiedergabeeinheit angezeigte Anzeigebild die Sichtbereichsanpassung erfährt. Dadurch kann alternativ oder zusätzlich zu der oben genannten digitalen Bildbereichsanpassung auch eine Sichtbereichsanpassung durch mechanische Verstellung der Position, Lage und/oder Ausrichtung der Bildaufnahmeeinheit durchgeführt werden.

Das digitale Sichtsystem gemäß der Erfindung ist als Spiegelersatzsystem für ein Fahrzeug geeignet, insbesondere vorzugsweise zugelassen nach UN/ECE-R46, wobei die mindestens eine Bildaufnahmeeinheit nach UN/ECE-R158, UN/ECE-R159 und/oder R151 zuglassen ist.

### Kurzbeschreibung der Zeichnungen

Im Folgenden werden bevorzugte Ausführungsbeispiele der Erfindung unter Bezugnahme auf die beigefügten Zeichnungen beschrieben, wobei gleiche Bezugszeichen gleiche Komponenten bzw. Schritte bezeichnen. Es zeigen:
- Fig. 1: eine schematische Darstellung eines Ausführungsbeispiels eines digitalen Sichtsystems gemäß der Erfindung;
- Fig. 2: eine schematische Innenansicht eines Fahrzeugcockpits eines Fahrzeugs, in dem das digitale Sichtsystem verwendet wird;
- Fig. 3: eine schematische Seitenansicht bzw. Draufsicht eines Fahrzeugs, in dem das digitale Sichtsystem verwendet wird;
- Fig. 4: ein Flussdiagramm eines erfindungsgemäßen Verfahrens gemäß einem ersten Ausführungsbeispiel;
- Fig. 5: ein Flussdiagramm eines erfindungsgemäßen Verfahrens gemäß einem zweiten Ausführungsbeispiel;
- Fig. 6: eine schematische Darstellung einer ersten Fahrsituation mit einem beispielhaften Straßenverlauf;
- Fig. 6a: ein Anzeigebild mit einem der Fig. 6 entsprechenden Sichtbereich;
- Fig. 7: eine schematische Darstellung der Fahrsituation mit dem Straßenverlauf gemäß Fig. 6 mit angepassten Sichtbereich;
- Fig. 7a: ein Anzeigebild mit dem der Fig. 7 entsprechenden angepassten Sichtbereich;
- Fig. 8: eine schematische Darstellung der Fahrsituation mit dem Straßenverlauf gemäß Fig. 6 mit einem gegenüber Fig. 7a alternativ angepassten Sichtbereich;
- Fig. 8a: ein Anzeigebild mit dem der Fig. 8 entsprechenden alternativ angepassten Sichtbereich;
- Fig. 9: eine schematische Darstellung einer zweiten Fahrsituation mit einem beispielhaften Straßenverlauf;
- Fig. 9a: ein Anzeigebild mit dem der Fig. 9 entsprechenden Sichtbereich;
- Fig. 10: eine schematische Darstellung der Fahrsituation mit Straßenverlauf gemäß Fig. 9; und
- Fig. 10a: ein Anzeigebild mit dem der Fig. 10 entsprechenden angepassten Sichtbereich.

### Bevorzugte Ausführungsformen der Erfindung

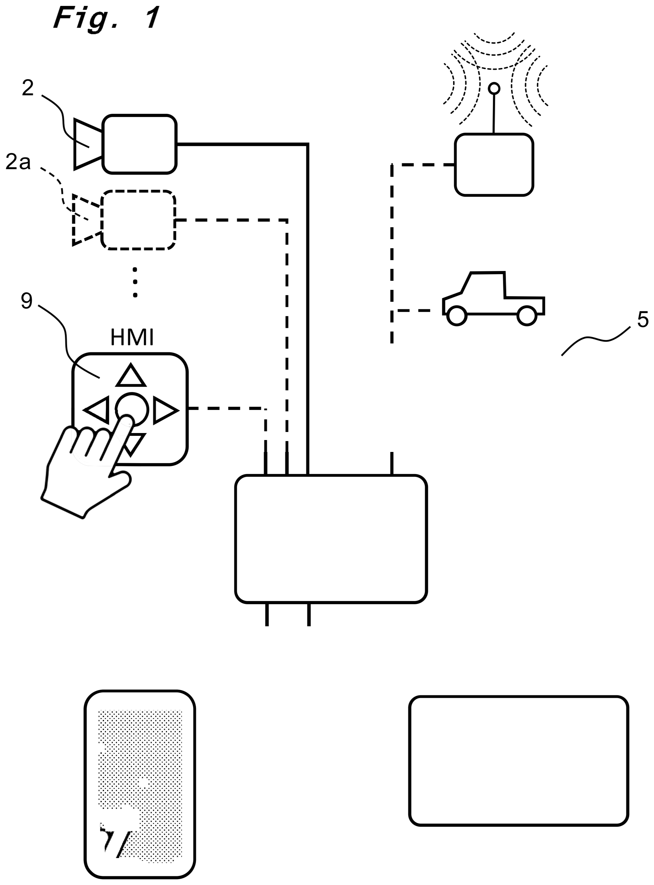

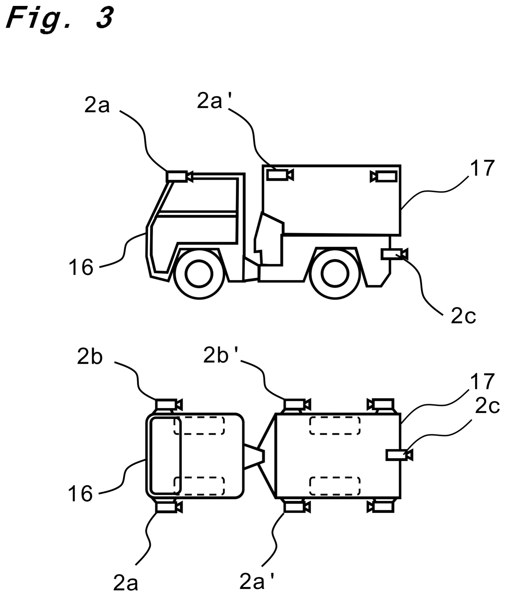

Figur 1 zeigt eine schematische Darstellung eines Ausführungsbeispiels eines digitalen Sichtsystems 1 gemäß der Erfindung. Das Sichtsystem 1 enthält gemäß diesem Ausführungsbeispiel eine Bildaufnahmeeinheit 2, die eine von mehreren Bildaufnahmeeinheiten 2, 2a ist. Figur 1 zeigt ebenfalls eine zweite Bildaufnahmeeinheit 2a. Die Bildaufnahmeeinheiten 2, 2a sind vorzugsweise außen an einem Fahrzeug (nicht in Figur 1 gezeigt) angebracht und nehmen Bilder der Umgebung des Fahrzeugs auf, wie später unter Bezugnahme auf Figur 3 beschrieben.

Figur 1 zeigt ferner eine Bildverarbeitungseinheit 3, die mit den Bildaufnahmeeinheiten 2, 2a jeweils verbunden ist, Bilddaten (Rohbilddaten) von diesen empfängt und diese verarbeitet. Die von der Bildverarbeitungseinheit 3 beispielsweise verarbeiteten Bilddaten werden auf einer Wiedergabeeinheit 4 als Anzeigebild angezeigt, was bedeutet, dass auf der Wiedergabeeinheit 4 ein vorgegebener Sichtbereich, also ein Bereich der Umgebung des Fahrzeugs, angezeigt wird, wie später beschrieben. Vorgegebener Sichtbereich bedeutet in diesem Zusammenhang, dass ein Bereich angezeigt wird, der für eine jeweilige Fahrsituation, wie z.B. Vorwärtsfahrt, standardmäßig angezeigt wird.

Figur 1 zeigt ferner eine Einheit 5, die mit einem satellitengestützten Positionsbestimmungssystem 6 (beispielsweise GPS-System) gekoppelt ist, das die aktuelle Position des Fahrzeugs ermittelt und an die Einheit 5 sendet. Gemäß dem bevorzugten Ausführungsbeispiel des digitalen Sichtsystems 1 ist das Positionsbestimmungssystem 6 lediglich optional und kann weggelassen werden. Die Einheit 5 ist ferner angepasst zum Erhalten von Information, die kennzeichnend ist für einen Straßenverlauf einer Straße, auf der das Fahrzeug fährt bzw. auf die das Fahrzeug zufährt.

Gemäß dem in Figur 1 gezeigten Sichtsystem 1 erhält die Einheit 5 die Information über den Stra-βenverlauf basierend auf charakteristischen Merkmalen für einen Straßenverlauf, die aus erfassten Bilddaten von der Bildaufnahmeeinheit bzw. den Bildaufnahmeeinheiten 2, 2a durch die Bildverarbeitungseinheit 3 bestimmt werden. Für den Straßenverlauf charakteristische Merkmale enthalten dabei beispielsweise Information über eine Fahrbahnmarkierung, eine Straßenrandmarkierung und/oder eine Fahrspurmarkierung, etc.

Wie in Figur 1 gezeigt, ist die Bildverarbeitungseinheit 3 mit einem Speicher 7 verbunden, in dem Straßenkartendaten vorab gespeichert sind. Der Speicher 7 kann derselbe Speicher sein, auf den auch ein Navigationssystem des Fahrzeugs zum Erhalten von Straßenkartendaten zugreift, oder kann ein davon unabhängiger Speicher sein. Ferner ist es möglich, dass der Speicher 7 nicht am oder im Fahrzeug vorgesehen ist, sondern extern vorhanden ist, und das digitale Sichtsystem über drahtlose Datenkommunikation mit dem Speicher 7 verbunden ist und kommuniziert. Die ausgelesenen Straßenkartendaten können von der Einheit 5 verwendet werden, um Information über den momentanen Straßenverlauf zu erhalten. Straßenkartendaten enthalten dabei beispielsweise mindestens eine Höheninformation der Straßenführung, eine Art der Straßenführung, eine Winkelrelation zwischen zwei zusammenkommenden Straßen und/oder eine Straßenkrümmung, etc..

Figur 1 zeigt ferner einen Verkehrsteilnehmer 8. Die Einheit 5 ist angepasst, weitere Informationen von dem anderen Verkehrsteilnehmer 8 zu empfangen, die Grundlage für die Ermittlung des Stra-βenverlauf sind bzw. für die Art und Weise und den Zeitpunkt einer Anpassung eines Sichtbereichs eines auf der Wiedergabeeinheit 4 angezeigten Anzeigebilds sind.

Figur 1 zeigt ferner eine Mensch-Maschine-Schnittstelle 9, die mit der Bildverarbeitungseinheit 3 verbunden ist. Gemäß der Erfindung sind in Abhängigkeit von Straßenverlauf, Verkehrssituation und/oder Fahrsituation Sichtbereichsanpassungen vordefiniert. Eine derartige Vordefinition kann beispielsweise in dem Speicher 7 gespeichert sein oder in einem separaten, nicht gezeigten Speicher. Über die Mensch-Maschine-Schnittstelle 9 kann ein Benutzer 10, insbesondere der Fahrer des Fahrzeugs, in dem das digitale Sichtsystem 1 verbaut ist, eine derart vordefinierte Sichtbereichsanpassung in dem Anzeigebild auf der Wiedergabeeinheit 4 in Abhängigkeit von Straßenverlauf, Verkehrssituation und/oder Fahrsituation bestätigen, ablehnen oder rückgängig machen. Beispielsweise kann der Benutzer 10, insbesondere der Fahrer oder Werkstattpersonal, eine werksseitig vordefinierte Sichtbereichsanpassung ändern und die geänderte Sichtbereichsanpassung abspeichern.

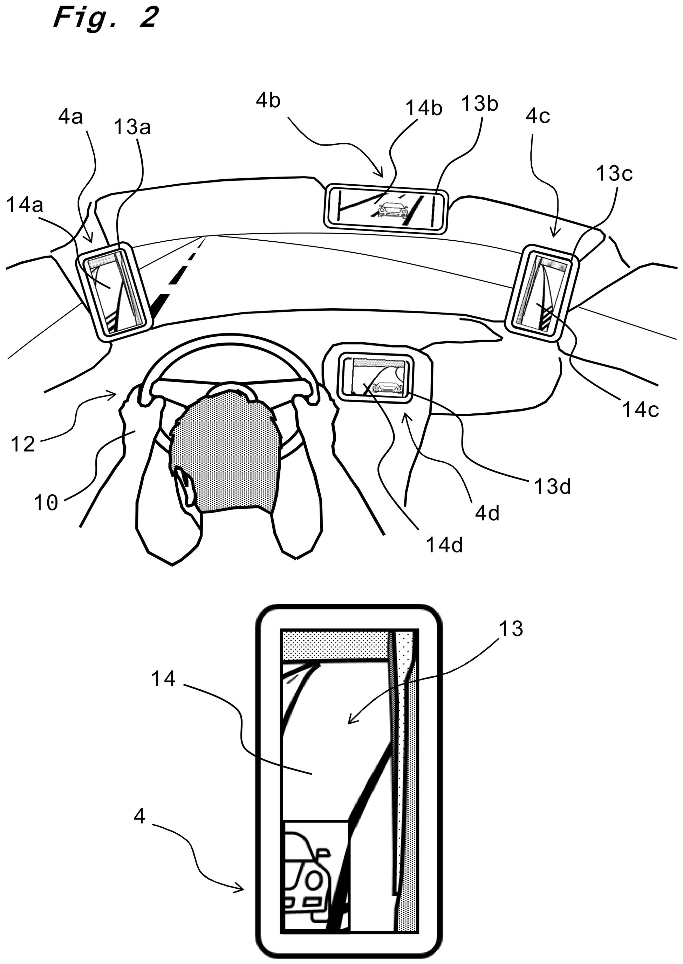

Figur 1 zeigt ferner einen Touchscreen 11, der drahtlos mit der Bildverarbeitungseinheit 3 gekoppelt ist und über den der Benutzer 10 beispielsweise verschiedene Bildaufnahmeeinheiten 2, 2a auswählen kann, deren Bilddaten für das Anzeigebild verwendet werden sollen. Der Touchscreen 11 kann die Funktion der Mensch-Maschine-Schnittstelle 9 übernehmen. Über den Touchscreen 11 kann der Benutzer 10 auch festlegen, welche Anzeigebilder mit welchen Sichtfeldern auf welcher Wiedergabeeinheit 4 angezeigt werden sollen, wie in Figur 2 gezeigt.

Figur 2 zeigt eine schematische Innenansicht eines Fahrzeugcockpits 12 eines Fahrzeugs, in dem das digitale Sichtsystem 1 verwendet wird. Wie in Figur 2 gezeigt, sind in dem Cockpit mehrere Wiedergabeeinheiten 4a-4d derart angeordnet, dass sie von dem Fahrer (Benutzer 10) gut einsehbar sind. Auf jeder der Wiedergabeeinheiten 4a-4d wird dem Fahrer ein Anzeigebild 13a-13d mit einem entsprechenden Sichtfeld 14a-14d angezeigt. Auf der Wiedergabeeinheit 4a wird dem Fahrer der linke seitlich hintere Bereich des Fahrzeugs angezeigt (Sichtfeld II), der beispielsweise von der in Figur 3 gezeigten Bildaufnahmeeinheit 2a, 2a' aufgenommen wird. Auf der Wiedergabeeinheit 4c wird dem Fahrer der rechte seitlich hintere Bereich des Fahrzeugs angezeigt (Sichtfeld II), der beispielsweise von der in Figur 3 gezeigten Bildaufnahmeeinheit 2b, 2b' aufgenommen wird. Auf der Wiedergabeeinheit 4d wird dem Fahrer der hintere Bereich des Fahrzeugs angezeigt, der beispielsweise von der in Figur 3 gezeigten Bildaufnahmeeinheit 2c aufgenommen wird. Auf der Wiedergabeeinheit 4b wird dem Fahrer der vordere Bereich des Fahrzeugs angezeigt.

Figur 3 zeigt eine schematische Seitenansicht bzw. Draufsicht eines Fahrzeugs 15, in dem das digitale Sichtsystem 1 verwendet wird. In diesem Ausführungsbeispiel ist das Fahrzeug 15 ein Nutzfahrzeug mit Zugmaschine 16 und Anhänger 17. Wie in Figur 3 gezeigt, sind an dem Fahrzeug 15 eine Mehrzahl von Bildaufnahmeeinheiten 2 angebracht, um Bilddaten von der Umgebung des Fahrzeugs 15 zu erfassen und dem Fahrer des Fahrzeugs 15 auf einer oder mehreren Wiedergabeeinheiten 4, wie in Figur 2 gezeigt, entsprechende Anzeigebilder 13 mit einem entsprechenden (angepassten) Sichtbereich 14 darzustellen. Die Bildaufnahmeeinheiten 2a und 2b, wie in Figur 3 gezeigt, können gemäß einer bevorzugten Ausführungsform auch einen Bereich vor dem Fahrzeug erfassen, um aus den erfassten Bilddaten den Straßenverlauf bzw. den Triggerpunkt zu ermitteln. Zusätzlich oder alternativ können hierfür weitere Bildaufnahmeeinheiten und Sensoren (nicht gezeigt), wie oben beschrieben verwendet werden.

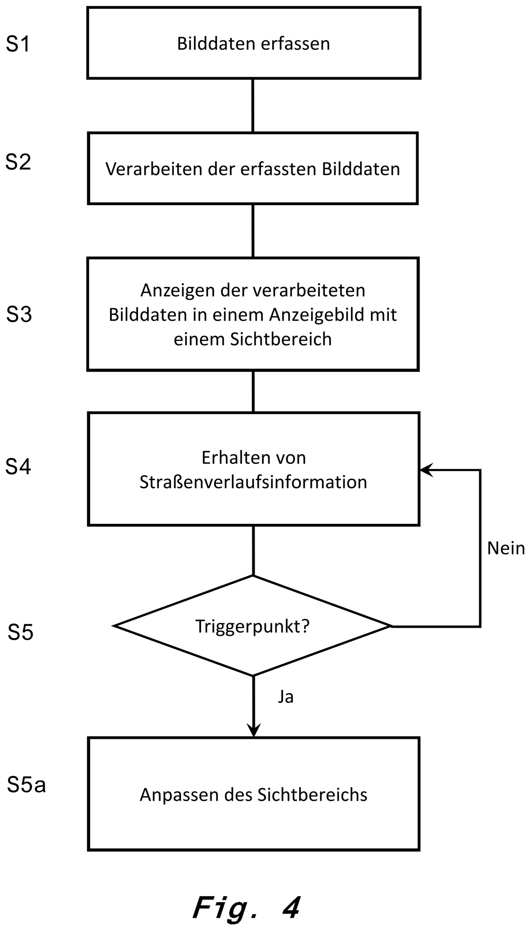

Figur 4 zeigt schematisch ein Flussdiagramm eines erfindungsgemäßen Verfahrens gemäß einem ersten Ausführungsbeispiel, das von dem digitalen Sichtsystem 1 ausgeführt werden kann.

In Schritt S1 erfasst mindestens eine Bildaufnahmeeinheit 2 des Sichtsystems 1 Bilddaten der Umgebung des Fahrzeugs 15. Diese werden in Schritt S2 von der Bildverarbeitungseinheit 3 verarbeitet zur Anzeige als Anzeigebild 13, das einen gegebenen Sichtbereich 14 darstellt, in Schritt S3. Das erfindungsgemäße Verfahren gemäß diesem Ausführungsbeispiel erhält kontinuierlich eine Straßenverlaufsinformation in Schritt S4, beispielsweise über die oben genannte Einheit 5.

In Schritt S5 wird bestimmt, ob das Fahrzeug einen Triggerpunkt erreicht hat, der für eine Änderung des Straßenverlaufs kennzeichnend ist, beispielsweise die Einmündung in eine Kreuzung oder Auffahrt auf eine Autobahn. Speziell wird bestimmt, ob ein Triggerpunkt, der auf einem zu erwartenden Straßenverlauf liegt und relevant für das Initiieren einer Anpassung des Sichtbereichs ist, von dem Fahrzeug erreicht wird.

In Schritt S5a erfolgt dann gemäß diesem Ausführungsbeispiel durch die Bilddatenverarbeitungseinheit 3 direkt nach dem Detektieren des Triggerpunkts eine Anpassung der von der mindestens einen Bildaufnahmeeinheit 2 aufgenommen Bilddaten mindestens in Abhängigkeit von der ermittelten Information über den Straßenverlauf derart, dass das dem Benutzer auf der Wiedergabeeinheit 4 angezeigte Anzeigebild 13 eine Sichtbereichsanpassung erfährt.

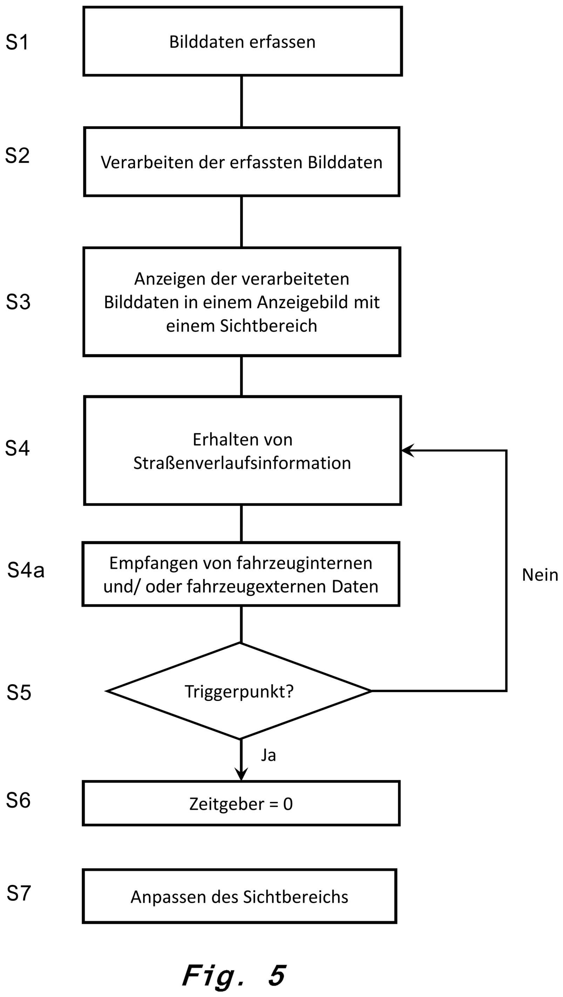

Figur 5 zeigt schematisch ein Flussdiagramm eines erfindungsgemäßen Verfahrens gemäß einem zweiten Ausführungsbeispiel, das von dem digitalen Sichtsystem 1 durchgeführt werden kann.

Das zweite Ausführungsbeispiel des erfindungsgemäßen Verfahrens unterscheidet sich von dem ersten Ausführungsbeispiel von Figur 4 dadurch, dass in einem Schritt S4a zusätzlich fahrzeuginterne und/oder fahrzeugexterne Daten empfangen werden und diese zusätzlich zu der erhaltenen Straßenverlaufsinformation bei der Sichtbereichsanpassung berücksichtigt werden. Fahrzeugexterne Daten enthalten beispielsweise neben Straßenverlaufsinformation Information über andere Verkehrsteilnehmer 8, deren Geschwindigkeit, Abstand, etc., wohingegen fahrzeuginterne Daten die Geschwindigkeit, Beschleunigung, Lenkradeinschlag, etc. des Fahrzeugs 15 betreffen, in dem das digitale Sichtsystem 1 installiert ist.

Nach dem Detektieren eines Triggerpunkts wird das Verfahren gemäß diesem Ausführungsbeispiel in Schritt S6 fortgesetzt, wo ein Zeitgeber gestartet wird, dessen Startwert von den in Schritt S4a empfangenen fahrzeuginternen und/oder fahrzeugexternen Daten abhängt. Erst nach einer entsprechend vordefinierten Zeit wird das Verfahren in Schritt S7 fortgesetzt und die Anpassung des Sichtbereichs durchgeführt. Dadurch kann beispielsweise der Zeitpunkt der Anpassung des Sichtbereichs mit der Geschwindigkeit des Fahrzeugs 15 verknüpft werden, da bei höherer Geschwindigkeit (fahrzeuginterne Daten) die Anpassung in der Regel schneller erfolgen muss. Ferner kann beispielsweise bei Stau oder hohem Verkehrsaufkommen (fahrzeugexterne Daten) auf einer Autobahn die Anpassung des Sichtbereichs, z.B. beim Auffahren auf die Autobahn, verzögert erfolgen. Analoges gilt für andere Verkehrssituationen oder Fahrsituationen.

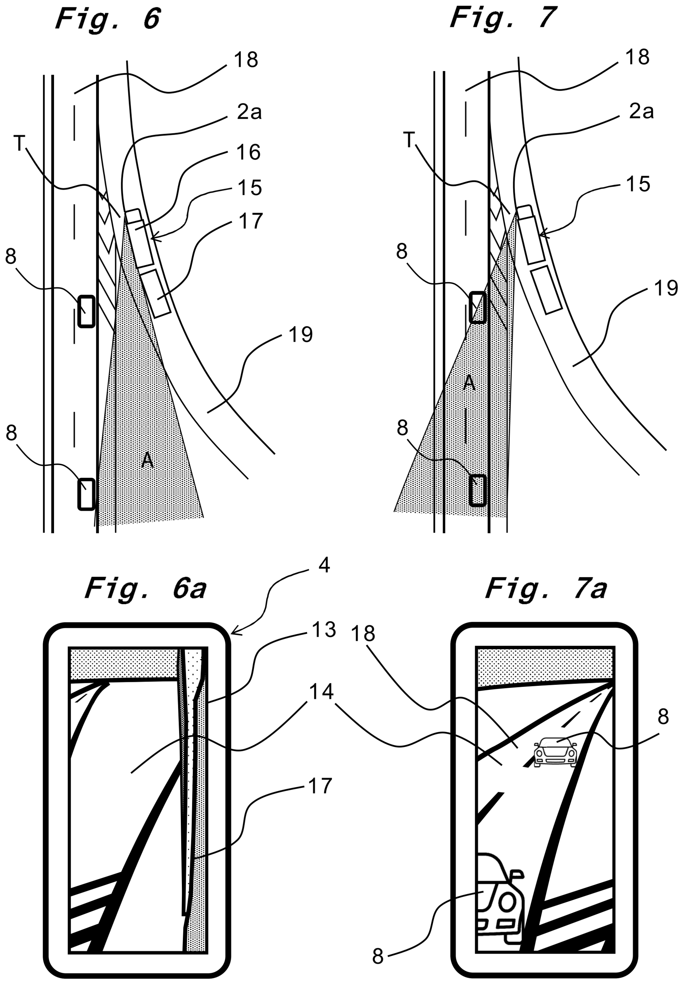

Figur 6 zeigt eine schematische Darstellung einer ersten Fahrsituation mit einem beispielhaften Straßenverlauf. Speziell fährt ein Fahrzeug 15 mit Zugmaschine 16 und Anhänger 17 auf eine Autobahn 18 auf. Die linke vordere Bildaufnahmeeinheit 2 nimmt den Bereich A seitlich hinter dem Fahrzeug 15 auf. Dieser beinhaltet im Wesentlichen beispielsweise das gesetzlich vorgeschriebene Sichtfeld II. Die von der Bildaufnahmeeinheit 2 erfassten Bilddaten des Bereichs A werden wie oben beschrieben verarbeitet und auf der Wiedergabeeinheit 4 als Anzeigebild 13 mit dem Sichtbereich 14, das dem Bereich A von Figur 6 entspricht, angezeigt.

Wie in Figur 6 gezeigt, befinden sich auf der Autobahn andere Verkehrsteilnehmer 8. Damit dem Fahrer des Fahrzeugs bessere Information in dem Anzeigebild 13 angezeigt wird, die es ihm ermöglicht den Verkehr auf der Autobahn 18 bei der Auffahrt vorausschauend beobachten zu können, wird gemäß der Erfindung der Sichtbereich 14 in Abhängigkeit von dem Straßenverlauf (hier: Autobahnauffahrt 19) derart angepasst, dass die anderen Verkehrsteilnehmer 8 im Sichtbereich 14 erscheinen und von dem Fahrer wahrgenommen werden können, wie in den Figuren 7 und 7a gezeigt. Eine derartige Verschiebung des Sichtbereichs kann beispielsweise dadurch erfolgen, dass ein Auslesebereich auf dem Bildsensor der Bildaufnahmeeinheit 2 verändert wird, wie oben beschrieben. Dabei wird der Auslesebereich auf dem Bildsensor, also die lokale Position des Auslesebereichs auf dem Bildsensor, verändert. Zusätzlich oder alternativ kann der Sichtbereich 14 von dem in Figur 6, 6a zu dem in Figur 7, 7a gezeigten Bereich verschoben werden, indem die oben beschriebene Einstelleinheit des Kameraarms auf dem die Bildaufnahmeeinheit 2 montiert ist, verändert wird.

Die obige Anpassung des Sichtbereichs 14 erfolgt gemäß der Erfindung dann, wenn ein Triggerpunkt T, wie in Figur 6 gezeigt erreicht wird. Wie oben beschrieben, liegt dieser Triggerpunkt T auf einem Straßenverlauf, auf dem des Fahrzeug 16 fährt bzw. zufährt und kann beispielsweise definiert sein durch den Krümmungsradius einer Fahrbahnmarkierung der Autobahnauffahrt, der aus Bilddaten ermittelt wird oder von anderen Sensoren am Fahrzeug detektiert wird, wie oben beschrieben.

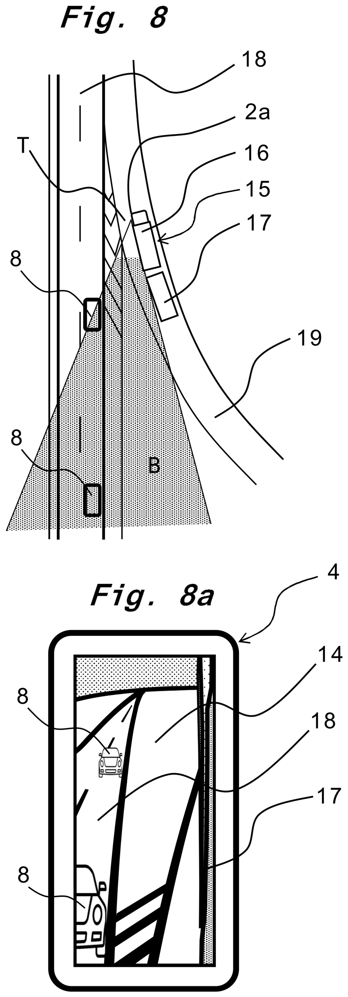

Figur 8 zeigt eine schematische Darstellung der Fahrsituation mit dem Straßenverlauf gemäß Figu-ren 6 und 7 mit einem alternativ angepasstem Sichtbereich 14. Wie in Figur 8, 8a gezeigt wird gemäß diesem Ausführungsbeispiel der Bereich A von Figur 6 nicht verschoben, sondern vergrößert. Der Sichtbereich A von Figur 6 wird also erweitert zu dem in Figur 8 gezeigten Sichtbereich B. Der Fahrer des Fahrzeugs 15 kann gemäß dieser Sichtbereichsanpassung also nicht nur die auf der Autobahn bereits fahrenden Verkehrsteilnehmer 8 wahrnehmen, sondern weiterhin den gesetzlich vorgeschrieben Sichtbereich II. Das in Figur 8a gezeigte Anzeigebild 13 kann dabei ein Panoramabild sein, das durch entsprechende unterschiedliche Skalierung der Auslesebereiche des Bildsensors der Bildaufnahmeeinheit 2 erhalten wird. Alternativ kann ein größerer Auslesebereich des Bildsensors verwendet werden, wie oben beschrieben.

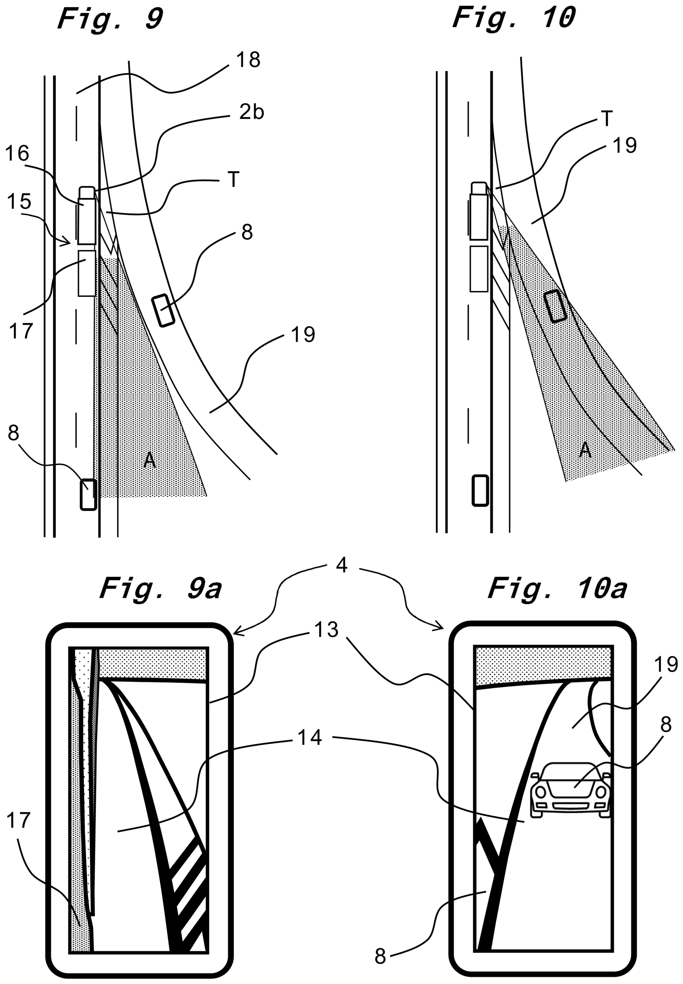

Figur 10 zeigt eine schematische Darstellung einer zweiten Fahrsituation mit dem in den Figuren 7 bis 9 gezeigten Straßenverlauf. Im Unterschied zu der in den Figuren 6 und 7 gezeigten Situation befindet sich das Fahrzeug 15 auf der Autobahn 18 und Bilddaten, die von einer Bildaufnahmeeinheit 2 auf der rechten Seite des Fahrzeugs 15 erfasst werden, werden so bearbeitet, dass das auf der Wiedergabeeinheit 4 angezeigte Anzeigebild 13 einen Sichtbereich 14 hat, der derart angepasst ist, dass der Fahrer des Fahrzeug 15 auf die Autobahn auffahrende Verkehrsteilnehmer wahrnehmen kann. Auch hier erfolgt die Anpassung bei Erreichen bzw. Detektieren des Triggerpunkts T, der in diesem Fall beispielsweise ein Merkmal ist, das kennzeichnend ist für das Vorhandensein einer Autobahnauffahrt.

### Bezugszeichenliste:

- 1: Sichtsystem
- 2: Bildaufnahmeeinheit
- 3: Bildverarbeitungseinheit
- 4: Wiedergabeeinheit
- 5: Einheit
- 6: Positionsbestimmungssystem
- 7: Speicher
- 8: Verkehrsteilnehmer
- 9: Mensch-Maschine-Schnittstelle
- 10: Benutzer
- 11: Touchscreen
- 12: Cockpit
- 13: Anzeigebild
- 14: Sichtbereich
- 15: Fahrzeug
- 16: Zugmaschine
- 17: Anhänger
- 18: Autobahn
- 19: Straßenverlauf (Autobahnauffahrt)
- T: Triggerpunkt

## Patentansprüche

1. Verfahren zum Anpassen eines auf einer Wiedergabeeinheit (4) eines digitalen Sichtsystems (1) eines Fahrzeugs (15) angezeigten Sichtbereichs (14) mit den Schritten:
Erfassen (S1) von Bilddaten einer Umgebung des Fahrzeugs (15) durch eine Bildaufnahmeeinheit (2) des digitalen Sichtsystems (1),
Verarbeiten (S2) der erfassten Bilddaten durch eine Bilddatenverarbeitungseinheit (3),
Anzeigen (S3) der verarbeiteten Bilddaten auf der Wiedergabeeinheit (4) als Anzeigebild (13) mit dem Sichtbereich (14),
Erhalten (S4) von Information, die kennzeichnend ist für einen Straßenverlauf (19) einer Straße, auf der das Fahrzeug (15) fährt und/oder auf die es zufährt, und
Verarbeiten der erfassten Bilddaten mindestens in Abhängigkeit von der erhaltenen Information über den Straßenverlauf (19) derart, dass das auf der Wiedergabeeinheit (4) angezeigte Anzeigebild (13) eine Sichtbereichsanpassung (S5a, S7) erfährt,
wobei die Sichtbereichsanpassung (S5a, S7) in dem Anzeigebild (14) erfolgt, wenn das Fahrzeug (15) einen auf dem Straßenverlauf liegenden vordefinierten Triggerpunkt erreicht, oder eine vordefinierte Zeit danach verzögert.

2. Verfahren nach Anspruch 1, bei dem das Erhalten (S4) der Information über den Straßenverlauf (19) die Schritte aufweist:
Bestimmen von Merkmalen in den erfassten Bilddaten, die kennzeichnend sind für den Straßenverlauf, und/oder
Bestimmen von Merkmalen in den erfassten Bilddaten, die kennzeichnend sind für eine aktuelle Verkehrssituation und/oder Fahrsituation, und/oder
bei dem das Erhalten (S4) der Information über den Straßenverlauf (19) die Schritte aufweist:
Empfangen von fahrzeuginternen und/oder fahrzeugexternen Signalen, die Information über Merkmale enthalten, die kennzeichnend sind für den Straßenverlauf, Verkehrssituation und/oder Fahrsituation, von an dem Fahrzeug (15) angebrachten Sensoren und/oder einem fahrzeuginternen Fahrerassistenzsystem.

3. Verfahren nach Anspruch 2, bei dem die Merkmale für den Straßenverlauf mindestens Information über eine Fahrbahnmarkierung, eine Straßenrandmarkierung und/oder eine Fahrspurmarkierung enthalten, und die Merkmale für die aktuelle Verkehrssituation und/oder Fahrsituation mindestens Information über andere Verkehrsteilnehmer, Abstandsinformation und/oder Geschwindigkeitsinformation enthalten.

4. Verfahren nach einem der vorangegangenen Ansprüche, bei dem das Erhalten (S4) der Information über den Straßenverlauf (19) die Schritte aufweist:
Ermitteln der aktuellen Position des Fahrzeugs (15), und
Auslesen von vorabgespeicherten Straßenkartendaten aus einem Speicher (7) basierend auf der ermittelten aktuellen Position.

5. Verfahren nach Anspruch 4, bei dem die Straßenkartendaten mindestens eine Höheninformation der Straßenführung, eine Art der Straßenführung, eine Winkelrelation zwischen zwei zusammenkommenden Straßen und/oder eine Straßenkrümmung enthalten.

6. Verfahren nach einem der vorangegangenen Ansprüche, ferner mit
Verarbeiten der erfassten Bilddaten in Abhängigkeit von der aktuellen Verkehrssituation, der Fahrsituation, den empfangenen fahrzeuginternen und/oder den fahrzeugexternen Signalen derart, dass das auf der Wiedergabeeinheit (4) angezeigte Anzeigebild (13) die Sichtbereichsanpassung erfährt, und/oder
bei dem die vordefinierte Zeit für die Bildbereichsanpassung in dem Anzeigebild (14) auf dem Straßenverlauf, den empfangenen fahrzeuginternen Signalen, den fahrzeugexternen Signalen, der aktuellen Verkehrssituation und/oder der aktuellen Fahrsituation basiert, und/oder
bei dem die Sichtbereichsanpassung (S6) in dem Anzeigebild (13) folgende Schritte enthält:
Skalieren der Bilddaten derart, dass in dem Anzeigebild (13) ein größerer oder kleinerer Bereich von der Umgebung des Fahrzeugs angezeigt wird,
Verändern eines Auslesebereichs eines Bildsensors der Bildaufnahmeeinheit (2), der für das Anzeigebild (13) verwendet wird, derart, dass die auf dem Anzeigebild (13) gezeigte Umgebung des Fahrzeugs verschoben wird, und/oder
Verändern einer Bildaufteilung des Anzeigebilds (13) derart, dass verschiedene Bereiche der Umgebung in unterschiedlichen Bildbereichen des Anzeigebilds (13) angezeigt werden.

7. Verfahren nach einem der vorangegangenen Ansprüche, ferner mit
einem Ansteuern eines Verstellmechanismus eines an dem Fahrzeug (15) angebrachten Kameraarms, um die relative Position zwischen der Bildaufnahmeeinheit (2) und dem Fahrzeug (15) einzustellen, damit das auf der Wiedergabeeinheit (4) angezeigte Anzeigebild die Sichtbereichsanpassung erfährt.

8. Digitales Sichtsystem für ein Fahrzeug, enthaltend
eine am Fahrzeug (15) angebrachte Bildaufnahmeeinheit (2), die angepasst ist zum Erfassen von Bilddaten der Umgebung des Fahrzeugs (15),
eine Bilddatenverarbeitungseinheit (3), die angepasst ist, die von der Bildaufnahmeeinheit (2) erfassten Bilddaten zu verarbeiten,
eine von einem Benutzer des Fahrzeugs (15) einsehbare Wiedergabeeinheit (4), auf der die von der Bildaufnahmeeinheit (2) aufgenommenen und die von der Bilddatenverarbeitungseinheit (3) verarbeiteten Bilddaten als Anzeigebild (13) mit einem Sichtbereich (14) dem Benutzer angezeigt werden,
eine Einheit (5) zum Erhalten von Information, die kennzeichnend ist für einen Straßenverlauf (19) einer Straße, auf der das Fahrzeug (15) fährt und/oder auf die es zufährt, wobei
die Bilddatenverarbeitungseinheit (3) angepasst ist, die von der Bildaufnahmeeinheit (2) aufgenommen Bilddaten mindestens in Abhängigkeit von der erhaltenen Information über den Straßenverlauf (19) derart zu verarbeiten, dass das dem Benutzer (10) auf der Wiedergabeeinheit (4) angezeigte Anzeigebild (13) eine Sichtbereichsanpassung erfährt, wobei die Sichtbereichsanpassung in dem Anzeigebild (14) erfolgt, wenn das Fahrzeug (15) einen auf dem Straßenverlauf liegenden vordefinierten Triggerpunkt erreicht, oder eine vordefinierten Zeit danach verzögert.

9. Digitales Sichtsystem nach Anspruch 8, bei dem
die Bilddatenverarbeitungseinheit (3) angepasst ist zum Bestimmen von Merkmalen in den erfassten Bilddaten, die kennzeichnend sind für den Straßenverlauf, und/oder
die Bilddatenverarbeitungseinheit (3) angepasst ist zum Bestimmen von Merkmalen in den erfassten Bilddaten, die kennzeichnend sind für eine aktuelle Verkehrssituation und/oder Fahrsituation, und/oder
bei dem die Merkmale für den Straßenverlauf mindestens Information über eine Fahrbahnmarkierung, eine Straßenrandmarkierung und/oder eine Fahrspurmarkierung enthalten, und die Merkmale für die aktuelle Verkehrssituation und/oder Fahrsituation mindestens Information über andere Verkehrsteilnehmer, Abstandsinformation und/oder Geschwindigkeitsinformation enthalten.

10. Digitales Sichtsystem nach Anspruch 8 oder 9, bei dem die Einheit (5) angepasst ist zum Empfangen von fahrzeuginternen und/oder fahrzeugexternen Signalen, die Information über Merkmale enthalten, die kennzeichnend sind für den Straßenverlauf, Verkehrssituation und/oder Fahrsituation, von an dem Fahrzeug (15) angebrachten Sensoren und/oder einem fahrzeuginternen Fahrerassistenzsystem.

11. Digitales Sichtsystem nach einem der Ansprüche 8 bis 10, bei dem die Einheit (5) angepasst ist zum Empfangen der aktuellen Position des Fahrzeugs (15), und zum Auslesen von vorabgespeicherten Straßenkartendaten aus einem Speicher (7).

12. Digitales Sichtsystem nach Anspruch 11, bei dem die Straßenkartendaten mindestens eine Höheninformation der Straßenführung, eine Art der Straßenführung, eine Winkelrelation zwischen zwei zusammenkommenden Straßen und/oder eine Straßenkrümmung enthalten.

13. Digitales Sichtsystem nach einem der Ansprüche 8 bis 12, bei dem die Bilddatenverarbeitungseinheit (3) angepasst ist zum
Verarbeiten der erfassten Bilddaten in Abhängigkeit von der aktuellen Verkehrssituation, der Fahrsituation, den empfangenen fahrzeuginternen Signalen und/oder fahrzeugexternen Signalen derart, dass das auf der Wiedergabeeinheit (4) angezeigte Anzeigebild (14) die Sichtbereichsanpassung erfährt, und/oder
bei dem die vordefinierte Zeit zur Bildbereichsanpassung in dem Anzeigebild (14) auf dem Straßenverlauf, den fahrzeuginternen Signalen, den fahrzeugexternen Signalen, der aktuellen Verkehrssituation und/oder der aktuellen Fahrsituation basiert, und/oder
bei dem die Bildverarbeitungseinheit (3) angepasst ist, um die Sichtbereichsanpassung durchzuführen,
durch Skalieren der Bilddaten derart, dass in dem Anzeigebild (13) ein größerer oder kleinerer Bereich von der Umgebung des Fahrzeugs angezeigt wird,
durch Verändern eines Auslesebereichs eines Bildsensors der Bildaufnahmeeinheit (2), der für das Anzeigebild (13) verwendet wird derart, dass die auf dem Anzeigebild (14) gezeigte Umgebung des Fahrzeugs verschoben wird, und/oder
durch Verändern einer Bildaufteilung des Anzeigebilds (13) derart, dass verschiedene Bereiche der Umgebung in unterschiedlichen Bildbereichen des Anzeigebilds (13) angezeigt werden, und/oder
ferner mit einer Mensch-Maschine-Schnittstelle (9) über die die Sichtbereichsanpassung in dem Anzeigebild (13) in Abhängigkeit von Straßenverlauf, fahrzeuginternen Signalen, fahrzeugexternen Signalen, Verkehrssituation und/oder Fahrsituation vordefiniert, bestätigt, abgelehnt oder rückgängig gemacht werden kann, und/oder
ferner mit einem am Fahrzeug (15) angebrachten Kameraarm, der eine Verstellmechanismus aufweist zur Veränderung der relativen Position zwischen der Bildaufnahmeeinheit (2) und dem Fahrzeug (15) derart, dass das dem Benutzer (10) auf der Wiedergabeeinheit (4) angezeigte Anzeigebild die Sichtbereichsanpassung erfährt.

14. Digitales Sichtsystem nach einem der Ansprüche 8 bis 13, das nach UN/ECE-R46 zugelassen ist, wobei die Bildaufnahmeeinheit (2) nach UN/ECE-R158, UN/ECE-R159 und/oder R151 zuglassen ist.

15. Digitales Sichtsystem nach einem der Ansprüche 8 bis 14, das angepasst ist zum Durchführen des Verfahrens nach einem der Ansprüche 1 bis 7.
